# NOUVEAU FASCICULE DE BREVET EUROPEEN

(11) **EP 2 394 878 B2**
(45) Date de publication et mention de la décision concernant l'opposition: **07.12.2016**
(45) Mention de la délivrance du brevet: 17.04.2013
(21) Numéro de dépôt: 11305050.4
(22) Date de dépôt: 18.01.2011
(51) Int. Cl.: B61D 17/02, B61D 17/12, B60L 5/18

(54) **Véhicule ferroviaire et procédé de fabrication correspondant**
Schienenfahrzeug und entsprechendes Herstellungsverfahren
Railway vehicle and corresponding manufacturing method

(30) Priorité: 19.01.2010 FR 1050337
(43) Date de publication de la demande: 14.12.2011
(73) Titulaire: ALSTOM Transport Technologies, 93400 Saint-Ouen (FR)
(72) Inventeur: Hermant, Patrick, 17137 NIEUL SUR MER (FR)
(74) Mandataire: Lavoix

(56) Documents cités:
- EP-A2- 0 649 767
- EP-A2- 0 869 029
- JP-A- 5 176 403
- JP-A- H05 328 513
- JP-B2- 4 386 253
- Norme DIN EN 501 24-1

## Description

La présente invention concerne une partie de véhicule ferroviaire, un véhicule ferroviaire et un procédé de fabrication d'une partie d'un véhicule ferroviaire.

Le document JP-A-5 176 403 décrit une partie de véhicule ferroviaire conforme au préambule de la revendication 1.

De manière générale, tous les trains ou locomotives présentent une partie dégagée du toit, c'est-à-dire non recouverte par un capot, destinée à recevoir l'ensemble des équipements haute tension de toit du véhicule ferroviaire, tels qu'un pantographe, un disjoncteur haute tension, différents sectionneurs pour configurer les circuits d'alimentation ou de mise à la masse, des systèmes de protection (parafoudre,....), etc.

Ces équipements haute tension comprennent habituellement des conducteurs électriques à l'air libre (par exemple des contacts) susceptibles, lors du fonctionnement du véhicule ferroviaire, de se trouver à des potentiels dont la différence, soit entre eux, soit avec le toit qui est généralement utilisé comme conducteur de masse électrique, peut être supérieure à 5 000 volts.

La partie dégagée du toit est entourée latéralement d'acrotères sensiblement verticaux, et, en amont et en aval, par des capots intégraux, c'est-à-dire recouvrant entièrement le toit. Ainsi, la partie dégagée du toit se trouve dans une « baignoire ». Celle-ci génère des turbulences aérodynamiques qui dégradent l'acoustique et l'aérodynamique du véhicule. En outre, cette partie dégagée du toit, de part la taille de la baignoire, est très mal protégée des intempéries.

Il existe donc un besoin pour un véhicule ferroviaire permettant de concevoir une forme en baignoire de taille réduite, tout en assurant les isolements nécessaires entre les différents conducteurs, particulièrement pour les véhicules alimentés par la haute tension.

A cet effet, l'invention a pour objets une partie de véhicule ferroviaire conforme à l'une des revendications 1 à 8 et un véhicule ferroviaire conforme à la revendication 9.

Grâce à l'invention, il est possible de disposer une paroi isolante au plus prêt des conducteurs électriques, tout en gardant un faible risque de formation d'un arc électrique, par exemple par claquage, le long de la paroi isolante, entre deux conducteurs. Par exemple, les acrotères peuvent être rapprochés des équipements présents dans la partie dégagée du toit, ce qui permet de réduire la dimension de la baignoire.

Encore un autre avantage de l'invention réside dans le fait qu'il est possible de garder les dispositifs électriques proches les uns des autres, malgré la proximité de la paroi isolante.

Les caractéristiques et avantages de l'invention, ainsi que d'autres, seront illustrés dans la description qui va suivre d'un exemple préféré de réalisation de l'invention. La description fait référence aux dessins annexés, parmi lesquels :
- la figure 1 est une vue en trois dimensions d'un véhicule ferroviaire selon l'invention ;
- la figure 2A est une vue en coupe transversale d'une partie supérieure aval de la figure 1 ; et la figure 2B est une vue agrandie de la zone Il de la figure 2A ;
- la figure 3 est une vue isolée en trois dimensions d'un capotage de la partie supérieure de la figure 2 ;
- la figure 4 est une vue en coupe transversale d'une partie supérieure amont du véhicule ferroviaire de la figure 1, illustrant un exemple comparatif n'appartenant pas à l'invention ;
- la figure 5 est une autre vue en coupe transversale de la partie supérieure amont, illustrant un exemple comparatif n'appartenant pas à l'invention ;
- les figures 6 et 7 sont des vues schématiques des étapes de procédés de fabrication de la partie supérieure de la figure 2 ; et,
- les figures 8 et 9 sont des représentations virtuelles des zones de haute et basse tension de la partie supérieure de la figure 2.

Dans la description qui va suivre, une distance dite « en ligne droite » entre deux éléments signifie une distance sans tenir compte des obstacles physiques entre ces deux éléments. Une distance entre deux points d'une paroi, dite évaluée « le long » de la paroi, signifie qu'il s'agit de la plus courte des distances curvilignes évaluées le long des lignes à la surface de la paroi qui passent par ces deux points. La ligne correspondant à cette distance la plus courte est dite « ligne de fuite » par analogie avec l'utilisation de l'expression « ligne de fuite » dans le domaine des isolateurs électriques.

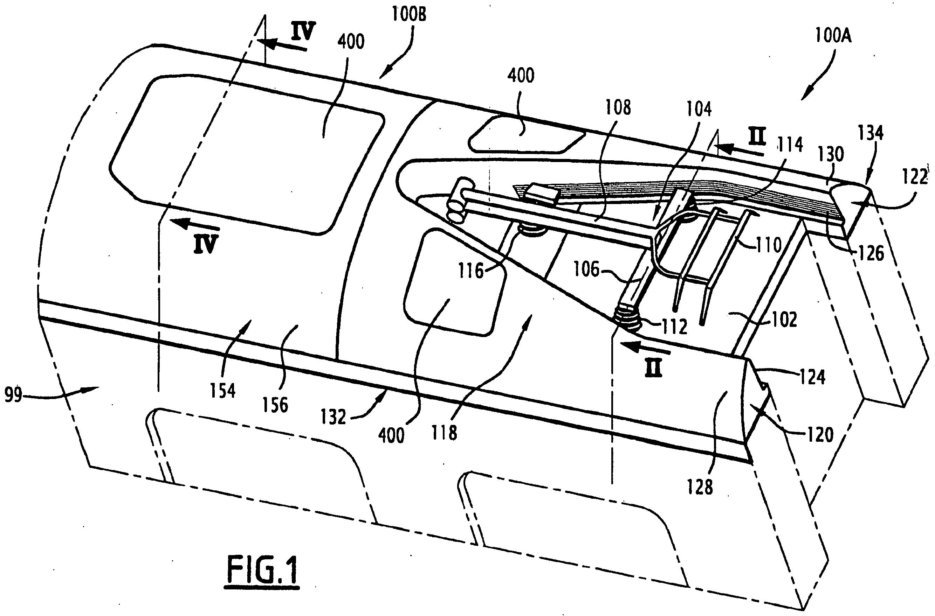

En référence à la figure 1, un véhicule ferroviaire 99 selon l'invention est représenté. Le véhicule ferroviaire 99 comprend une partie supérieure 100A aval, partiellement ouverte, et une partie supérieure amont 100B recouverte.

Le véhicule ferroviaire 99 comprend un toit 102 (aussi appelé pavillon), qui est conducteur électrique, et qui s'étend sensiblement horizontalement, en particulier sous la partie supérieure aval 100A et sous la partie supérieure amont 100B du véhicule ferroviaire 99. Le toit 102 forme un premier conducteur électrique. Le toit 102 est par exemple utilisé comme conducteur de masse électrique.

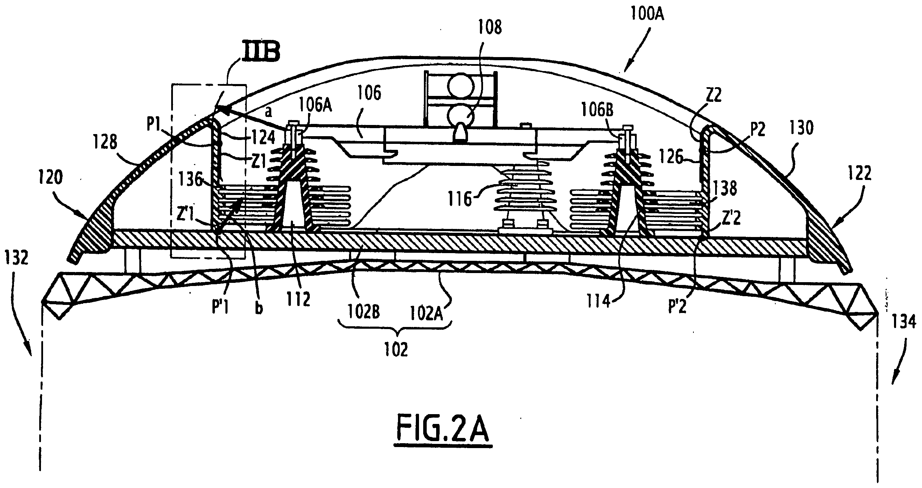

En référence à la figure 2A, dans l'exemple illustré, au niveau de la partie supérieure aval 100A, le toit 102 comprend une structure de toit 102A, en arc, et un châssis 102B, en forme de plaque horizontale, le châssis 102B étant monté sur la structure de toit 102A. Les deux éléments 102A et 102B sont conducteurs électriques et en contact électrique l'un avec l'autre. Comme indiqué précédemment, ils sont utilisés comme masse.

En référence aux figures 1 à 3, le véhicule ferroviaire comprend en outre un pantographe 104 disposé sur le toit 102, dans la partie aval 100A, où le toit 102 est destiné à rester dégagé, c'est-à-dire non couvert par un capot, comme cela sera apparent par la suite. Le pantographe 104 comprend une armature fixe 106, une structure articulée 108 montée sur l'armature 106, et un archet 110 porté par la structure 108 et destiné à venir en contact d'une caténaire (non représentée) pour alimenter électriquement le véhicule ferroviaire 99. Chacun de ces éléments 106, 108 et 110, et en particulier l'armature 106, forment des seconds conducteurs électriques, susceptibles de se trouver, à un moment du fonctionnement du véhicule ferroviaire, à des potentiels supérieurs à 5 000 volts par rapport au toit 102, par exemple 12 000 volts ou bien 25 000 volts.

Trois isolateurs 112, 114 et 116 maintiennent l'armature 106 sur le toit 102. Chacun de ces isolateurs 112, 114, 116 comprend un empilement de disques isolant, de manière à éviter la formation d'un arc électrique entre l'armature 106 et le toit 102, le long de ces isolateurs.

L'armature 106 comprend des fixations 106A et 106B avec les isolateurs 112, 114. Ces fixations 106A, 106B sont également conductrices et au même potentiel que le reste de l'armature 106.

La partie supérieure aval 100A comprend en outre un premier capotage isolant 118 entourant le pantographe 104, de manière à former un logement ouvert par au-dessus, aussi dénommé « baignoire », à l'intérieur duquel est disposé le pantographe 104

Plus précisément, le premier capotage 118 comprend deux acrotères latéraux 120, 122, qui s'élèvent du toit 102. Chaque acrotère 120, 122 comprend une paroi interne 124, 126 sensiblement verticale et orientée vers le pantographe, et une paroi externe 128, 130 qui s'élève depuis l'un des bords latéraux 132, 134 du véhicule ferroviaire, jusqu'à rejoindre la paroi interne 124, 126 correspondantes. Les parois internes 124, 126 comprennent des portions avals sensiblement parallèles à la direction longitudinale générale du véhicule ferroviaire et des portions amont, s'étendant en biais par rapport à la direction longitudinale et se rejoignant en amont du pantographe 104 de sorte que le pantographe 104 est entouré latéralement et en amont. En revanche, le côté aval du pantographe 104 reste ouvert. Dans un autre mode de réalisation non représenté, le côté aval est également fermé.

Chaque paroi interne 124, 126, est munie d'ondulations 136, 138, formées, dans l'exemple illustré, par des nervures qui s'étendent d'amont en aval sur la paroi interne 124, 126, et qui se succèdent verticalement. De manière générale, les ondulations 136, 138, peuvent avoir une section transversale de forme quelconque, notamment de forme en ailette, mais sont définies par deux points d'inflexions successifs définissant deux changements de sens de courbure. De préférence, il est prévu au moins six nervures. En variante, les ondulations peuvent être formées par des rainures ménagées dans les parois internes 124 et 126.

De préférence, comme cela est représenté sur les figures, le premier capotage 118 est constitué d'une seule pièce, par exemple moulée. En particulier, les ondulations 136 et 138 font partie intégrante, c'est-à-dire venues de matières avec les parois internes 124 et 126.

En variante, le capotage 118 comprend plusieurs pièces fixées les unes aux autres, par exemple par collage et/ou par fixation mécanique. Par exemple, les ondulations sont rapportées sur les parois internes 124 et 126. Avantageusement, dans ces cas, le matériau constitutif des ondulations est choisi de manière à constituer un meilleur isolant électrique que le matériau constitutif des parois.

Chaque paroi interne 124, 126, s'étend à proximité de l'armature 106 du pantographe 104, de manière à diminuer la dimension de la « baignoire » où s'étend le pantographe. Cette proximité de l'armature a pour conséquence qu'il existe, sur chaque paroi interne 124, 126, une zone Z1, respectivement Z2, entièrement située à moins de 150 millimètres, en ligne droite, de l'armature 106 (dans l'exemple illustré, des fixations 106A et 106B de l'armature 106). Dans l'exemple illustré, les zones Z1 et Z2 sont situées à moins de 100 millimètres en ligne droite de l'armature 106 (distance « a » sur les figures). La zone Z1, respectivement la zone Z2, comprend, en particulier, un point P1, respectivement P2, le plus proche de l'armature 106 (dans l'exemple illustré des fixations 106A, 106B).

De la même manière, il existe sur chaque paroi interne 124, 126, une zone Z'1, respectivement Z'2, située entièrement à moins de 150 millimètres en ligne droite du toit 102 (à moins de 100 millimètres en ligne droite du châssis 102B dans l'exemple illustré, distance « a » sur les figures). En particulier, les parois internes 124 et 126 étant en contact avec le toit 102, la zone Z'1, respectivement la zone Z'2, comprend le point P'1, respectivement P'2, en contact avec le toit 102, ce point étant donc le point de Z'1, Z'2, le plus proche du toit 102.

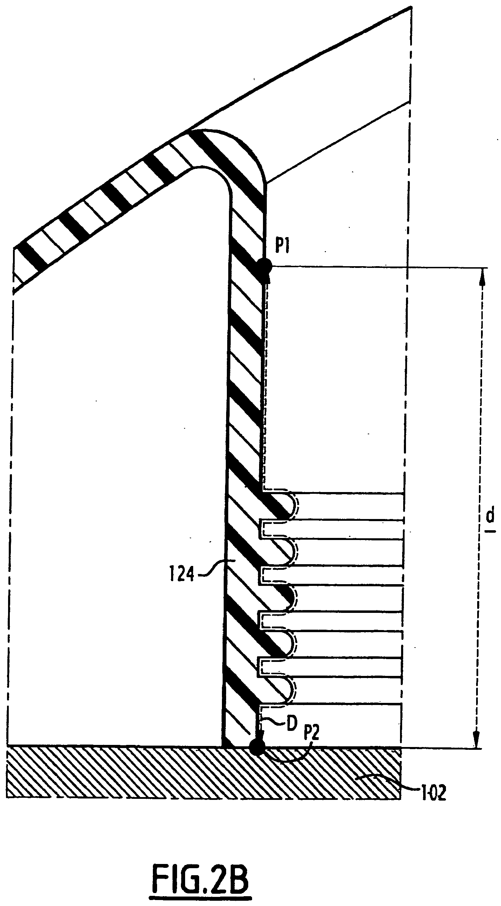

La distance en ligne droite entre les points de la zone Z1 et ceux de la zone Z'1 est relativement faible. En particulier, les points P1 et P'1, respectivement P2 et P'2, sont séparés d'une distance en ligne droite d, qui est ici de l'ordre de 50 à 100 millimètres (Figure 2B).

Cependant, grâce à la présence des ondulations 136, 138, la distance, le long de la paroi interne 124, respectivement 126, en suivant la sinuosité des ondulations 136, 138, entre les points de la zone Z1 et les points de la zone Z'1, respectivement les points de la zone Z2 et ceux de la zone Z'2, reste toujours supérieure ou égale à 400 millimètres, de préférence compris entre 400 et 800 millimètres, de préférence encore entre 600 et 800 millimètres. En particulier, la distance D entre le point P1 et le point P'1, respectivement P2 et P'2, est supérieure ou égale à 400 millimètres (Figure 2B).

Ainsi, malgré la proximité entre les parois internes 124, 126, et des équipements électriques présentant, entre eux, une différence de potentiel élevée, le risque d'apparition d'un arc électrique entre l'armature 106 et le toit 102 qui passerait le long de la paroi interne 124, 126, est faible.

De préférence, la distance D est au moins 200% plus grande que la distance d, de préférence 300% plus grande de la distance d. Ainsi, les ondulations 136, 138 permettent de doubler, voire même tripler, la distance en ligne droite d. Dans l'exemple illustré, les parois internes (sans les ondulations) sont planes, de sorte que la distance d peut être mesurée le long des parois internes.

En référence aux figures 1, 4 et 5, la partie supérieure amont 100B comprend également le toit 102 qui, à cet endroit, ne comprend pas de châssis, mais uniquement la structure de toit en arc 102A.

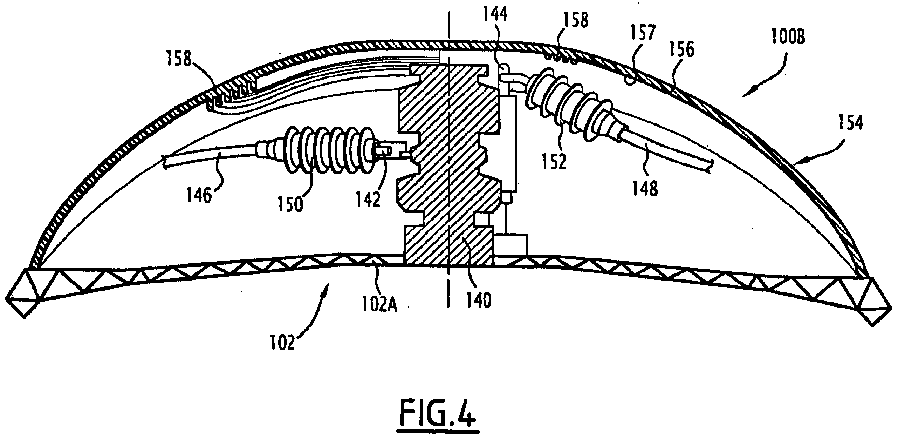

En référence à la figure 4, la partie supérieure amont 100B comprend un premier équipement électrique monté sur le toit 102, et plus précisément directement sur la structure de toit en arc 102A. Dans l'exemple illustré, l'équipement électrique est un disjoncteur 140. Le disjoncteur 140 comprend deux raccords 142 et 144 connectés, respectivement, à deux câbles électriques 146 et 148, par l'intermédiaire de, respectivement, deux isolateurs à disques 150 et 152.

La partie supérieure amont 100B comprend en outre un second capotage isolant 154 s'élevant du toit 102, et comprenant une paroi isolante 156 qui recouvre l'ensemble de la partie supérieure amont 100B, et en particulier les équipements électriques disposés sur le toit 102, par exemple le disjoncteur 140 et les câbles électriques 146 et 148. La paroi isolante 156 est disposée à très faible distance au-dessus des équipements électriques de la partie supérieure amont 100B.

Comme cela est visible sur la figure 4, la paroi isolante 156 est munie, sur une face interne 157, orientée vers le toit 102, d'ondulations 158 disposées de manière à éviter la survenue d'arcs électriques entre des points à haute tension des équipements électriques et des points à basse tension des équipements électriques (en particulier les masses électriques) qui passeraient le long de la paroi isolante 156.

En particulier, les ondulations sont configurées pour s'étendre entre les zones de la paroi isolante 156 situées entièrement à moins de 100 mm, de préférence à moins de 150 mm des points à haute tension, et les zones de la paroi isolante 156 situées entièrement à moins de 100 mm, de préférence à moins de 150 mm des points à basse tension, la différence de potentiel entre les points à haute tension et les points à basse tension étant de 5 000 volts ou plus.

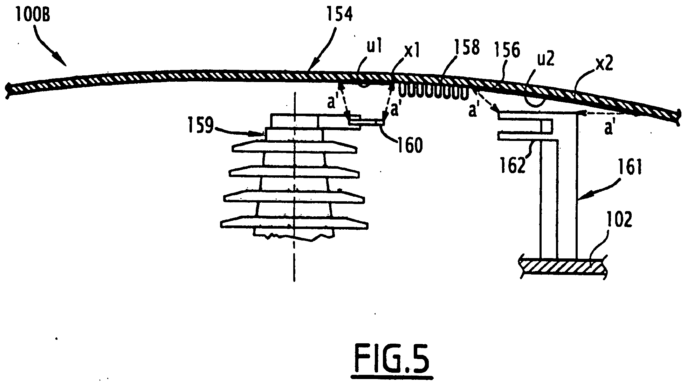

Ainsi, en référence à la figure 5 et de manière générale, la partie supérieure amont 100B comprend un premier équipement électrique 161 comprenant un conducteur 162 susceptible de se trouver à basse tension, par exemple relié à la masse et un second équipement électrique 159 comprenant un conducteur 160 susceptible de se trouver, lors du fonctionnement de l'équipement 159, à haute tension (5 000 volts ou plus).

Comme la paroi isolante 156 est disposée proche des premier et second équipements électriques, une zone U1 de la paroi isolante 156 se trouve à moins de 150 mm (distance « a' » sur la figure 5) du conducteur 160 à haute tension. Cette zone U1 comprend en particulier le point X1 qui est le point de U1 le plus proche du conducteur 160.

Une zone U2 de la paroi isolante 156 se trouve à moins de 150 mm (distance « a' » sur la figure 5) du conducteur 162 à basse tension. La zone U2 comprend en particulier un point X2 le plus proche de l'élément 162.

Or, une partie de la zone U1 se trouve à moins de 100 millimètres en ligne droite de la zone U2, et inversement. En particulier, les points X1 et X2 sont séparés d'une distance d inférieure à 400 millimètres. Il pourrait donc exister un risque de survenue d'un arc électrique se propageant le long de la paroi 156 entre les conducteurs 160 et 162.

Pour pallier ce risque, comme cela est visible sur la figure 5, des ondulations 158 sont disposées sur la surface intérieure de la paroi isolante 156 de manière à se succéder entre les deux zones U1 et U2. Ces ondulations 156 ont pour effet que les zones U1 et U2 sont séparées d'une distance supérieure ou égale à 400 millimètres, de préférence comprise entre 400 et 800 millimètres, le long de la paroi 156 en suivant la sinuosité des ondulations 158. En particulier, les points X1 et X2 sont séparés d'une distance D, le long de la paroi 156, supérieure à 400 millimètres.

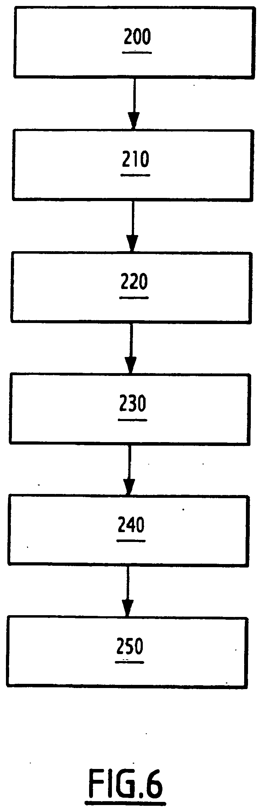

En référence à la figure 6, un procédé de fabrication de la partie supérieure 100A comprend les étapes suivantes.

Au cours d'une étape 200, des acrotères identiques à ceux des figures 1 à 3, si ce n'est qu'ils sont dépourvus des ondulations 136, 138, sont disposés dans la position prédéterminée illustrée sur les figures 1 à 4. Dans cette position, comme expliqué précédemment les parois internes 124 et 126 des acrotères sont à distance de l'armature 106 et au contact du toit 102. Cette étape peut être réalisée pour de vrai, par exemple en fabriquant un prototype ou bien une ébauche du produit final. Cette étape peut également être réalisée de manière virtuelle, par exemple par simulation sur ordinateur ou par calculs. Dans l'exemple illustré, cette étape est réalisée par simulation sur ordinateur.

Au cours d'une étape 210, il est déterminé, sur les parois 124, 126 ainsi disposées, les zones situées à moins de 100 millimètres de l'armature 106 (zones Z1 et Z2), et celles situées à moins de 100 mm du toit 102 (zones Z'1 et Z'2), de préférence à moins de 150 millimètres. Un premier point de la paroi 124, respectivement 126, le plus proche de l'armature 106 (point P1 appartenant par définition à la zone Z1, respectivement point P2 appartenant à la zone Z2), et un second point de la paroi 124, respectivement 126, le plus proche du toit 102 (point P'1 appartenant par définition à la zone Z'1, respectivement point P'2 appartenant à la zone Z'2), sont également déterminés au cours de cette étape. De même, cette étape est réalisée soit en vrai, soit de manière virtuelle.

Au cours d'une étape 220, la distance en ligne droite (c'est-à-dire dans l'exemple illustré, le long de la paroi interne 124, 126, plane) entre les deux points de la zone Z1 et ceux de la zone Z2, respectivement entre les points de la zone Z'1 et ceux de la zone Z'2, est comparée à une valeur prédéterminée, 400 millimètres dans l'exemple illustré. En particulier, la distance d en ligne droite entre les premier et second points P1, P'1, P2 et P'2 est comparée à la valeur prédéterminée. De préférence la valeur prédéterminée est issue d'une norme.

Comme les parois n'ont pas d'ondulations et qu'elles sont positionnées au plus près des équipements électriques, les distances en ligne droite précédentes ne sont pas toujours supérieures à la valeur prédéterminée, de sorte qu'il existe un risque de claquage se propageant le long des parois. C'est en particulier le cas lorsque la distance d en ligne droite entre les deux points P1 et P'1, P2 et P'2, est inférieure à la valeur prédéterminée.

Au cours d'une étape 230, on prévoit sur la paroi interne 124, 126, une ou plusieurs ondulation(s) entre les deux zones Z1 et Z'1, Z2 et Z'2, et donc, en particulier, entre les deux points P1 et P'1, P2 et P'2, afin que la distance entre deux points de ces deux zones, le long de la paroi ainsi munie de la ou des ondulations, devienne supérieure ou égale à la valeur prédéterminée. En particulier, la distance D entre les deux points P1 et P'1, P2 et P'2 devient supérieure ou égale à 400 millimètres.

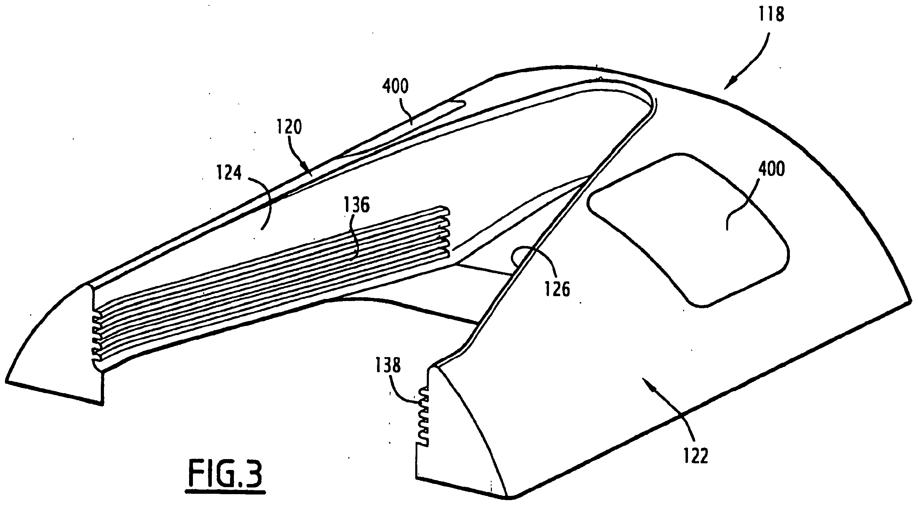

Au cours d'une étape 240, la paroi avec, dans le cas présent, la ou les ondulations, est fabriquée. Cette étape aboutit à l'obtention réelle des acrotères 120 et 122, et, de manière plus générale, à l'obtention réelle des parois 124 et 126. Dans l'exemple illustré, cette étape comprend la fabrication par moulage en une seule pièce du capotage 118 (tel qu'il est représenté sur la figure 3) avec les parois internes 124 et 126 munies des ondulations 136 et 138.

Au cours d'une étape 250, la partie supérieure du véhicule ferroviaire est fabriquée en disposant les acrotères 120 et 122 ainsi fabriqués dans la position prédéterminée telle qu'illustrée sur les figures 1 à 4, et donc également en disposant les parois internes 124 et 126 dans leur position prédéterminée, telle qu'illustrée sur les figures 1 à 3.

Le second capotage 154 est conçu d'une manière analogue.

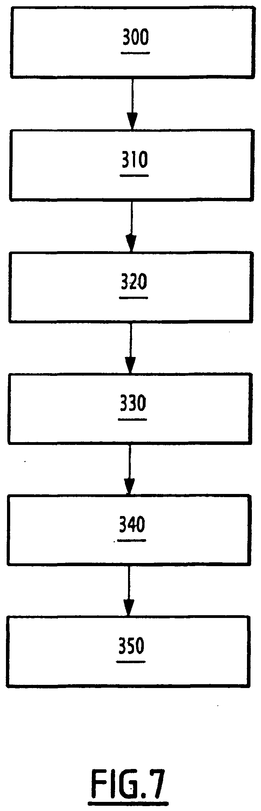

En référence à la figure 7, au cours d'une étape 300, on considère une paroi isolante 156' destinée à former la paroi 156 du second capotage 158, et, par conséquent, destinée à être disposée dans une position prédéterminée dans laquelle la paroi isolante est à proximité de premier et second conducteurs électriques susceptibles de se trouver, à un moment du fonctionnement du véhicule ferroviaire, à des potentiels respectifs dont la différence est supérieure à 5 000 volts.

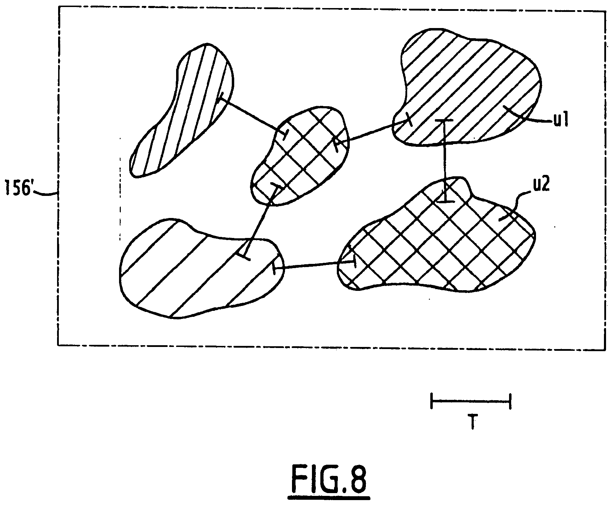

Au cours d'une étape 310, on détermine, sur la paroi isolante 156', une ou plusieurs première(s) zone(s) situées à moins de 100 millimètres, de préférence à moins de 150 millimètres, du premier conducteur à haute tension, et une ou plusieurs seconde(s) zone(s) situées à moins de 100 millimètres, de préférence à moins de 150 millimètres, du second conducteur à basse tension, lorsque la paroi isolante est dans sa position prédéterminée. Le résultat de cette étape est illustré sur la figure 8, avec les premières zones (haute tension) indiquées en hachurage simple et les secondes zones (basse tension) indiquées en hachurage croisé. Les zones U1 et U2 de la figure 5 sont indiquées. On remarquera que chacun des points de la paroi isolante 156' les plus proches des conducteurs haute tension et basse tension sont, par construction, dans les zones ainsi déterminées.

Au cours d'une étape 320, on compare, le long de la paroi isolante 156', la distance entre les premières zones et les secondes zones à une valeur prédéterminée T, de 400 millimètres dans l'exemple illustré. Comme cela est visible sur la figure 8, les premières zones sont à une distance inférieure à la valeur prédéterminée T des secondes zones.

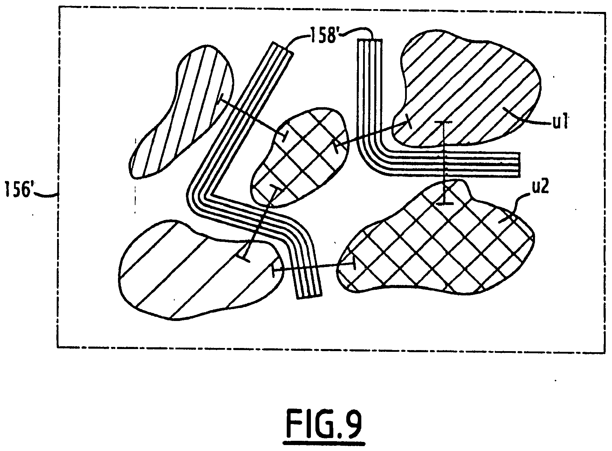

En conséquence, au cours d'une étape 330, on prévoit, sur la paroi isolante 156', des ondulations 158' entre les premières et secondes zones, afin que la distance entre les premières zones et les secondes zones, le long de la paroi isolante ainsi munie d'ondulations, devienne supérieure ou égale à la valeur prédéterminée. Le résultat de cette étape est illustré sur la figure 9. Cette étape a en particulier pour résultat que les points sur la paroi isolante les plus proches des conducteurs haute tension et basse tension sont séparés d'une distance supérieure ou égale à 400 millimètres, de préférence comprise entre 400 et 800 millimètres, notamment entre 600 et 800 millimètres.

On remarquera que les étapes 300 à 330 peuvent être réalisées en vrai, ou bien de manière virtuelle, par exemple par simulation sur ordinateur.

Au cours d'une étape 340, on fabrique la paroi 156 munie des ondulations 158, à partir de la paroi 156' et des ondulations 158' prévues.

Enfin, au cours d'une étape 350, on fabrique la partie supérieure amont 100B du véhicule ferroviaire 99 en disposant la paroi 156 ainsi fabriquée dans la position prédéterminée, telle que représentée sur les figures 1, 4 et 5.

L'invention permet de disposer un carénage à proximité immédiate des équipements électriques prévus sur le toit d'un véhicule ferroviaire. Le carénage peut délimiter un logement adapté à la réception d'équipements électriques aériens, tels qu'un pantographe.

De plus, l'invention permet de réduire l'espacement entre les équipements électriques, de sorte que l'on gagne en compacité.

Avantageusement, le capotage est muni de trappes de visite permettant d'accéder facilement aux équipements électriques recouverts. Ces trappes sont repérées de manière générale par le chiffre 400 sur les figures 1 et 3. De préférence, ces trappes sont fabriquées en un matériau transparent pour former des fenêtres facilitant les opérations d'inspection et de maintenance.

Ainsi, l'invention permet de réduire les turbulences aérodynamiques et l'acoustique du véhicule ferroviaire en permettant de disposer un capotage aux formes adaptées, au plus près des équipements électriques, sans avoir besoin d'espacer ces équipements électriques les uns des autres.

## Revendications

1. Partie de véhicule ferroviaire du type comprenant :
- un toit conducteur électrique (102) ;
- des premier et second conducteurs électriques (102, 106) susceptibles de se trouver, à un moment du fonctionnement du véhicule ferroviaire, à des potentiels respectifs dont la différence est supérieure à 5 000 volts, le toit formant le premier conducteur et un pantographe formant le second conducteur (106), le second conducteur (106) étant fixé au toit (102) par un isolateur ;
- un capotage isolant (118) s'élevant du toit et entourant le pantographe (104) de manière à former un logement ouvert par au-dessus, aussi dénommé « baignoire », à l'intérieur duquel est disposé le pantographe (104), le capotage comportant une paroi interne ;
- ladite paroi interne constituant une paroi isolante (124 ; 126) s'étendant à distance d'au moins un des premier et second conducteurs (102, 106), ayant un premier point (P1 ; P2 ; X1) le plus proche du second conducteur électrique (106) et un second point (P'1 ; P'2 ; X2) le plus proche du premier conducteur électrique (102),
la partie du véhicule ferroviaire étant **caractérisée en ce que** la paroi isolante (124 ; 126) comprend au moins une ondulation (136 ; 138), notamment plusieurs, entre les premier et second points (P1, P'1 ; P2, P'2 ; X1, X2), de sorte que les premier et second points (P1, P'1 ; P2, P'2 ; X1, X2) sont séparés, le long de la paroi isolante (124 ; 126), d'une distance (D) prédéterminée, de manière à éviter la survenue d'arcs électriques entre les premier et second conducteurs électriques.

2. Partie de véhicule ferroviaire selon la revendication 1, **caractérisée en ce qu'**au moins une ondulation parmi le ou les ondulation(s) (136 ; 138) est venue de matière avec la paroi (124 ; 128).

3. Partie de véhicule ferroviaire selon la revendication 1, **caractérisée en ce qu'**au moins une ondulation parmi le ou les ondulation(s) est rapportée sur la paroi (124 ; 126).

4. Partie de véhicule ferroviaire selon la revendication 3, **caractérisé en ce que** le matériau de ladite au moins une ondulation rapportée est plus isolant que le matériau constitutif de la paroi.

5. Partie de véhicule ferroviaire selon l'une quelconque des revendications précédentes, **caractérisée en outre en ce que** ladite distance (D) prédéterminée est d'au moins 400 millimètres, de préférence encore entre 400 et 800 millimètres, de préférence entre 600 et 800 millimètres.

6. Partie de véhicule ferroviaire selon l'une quelconque des revendications précédentes, **caractérisée en outre en ce que** les premier et second points (P1, P'1 ; P2, P'2 ; X1, X2) sont séparés d'une distance d en ligne droite, et **en ce que** la distance D est au moins 200% plus grande que la distance d, de préférence 300% plus grande de la distance d.

7. Partie de véhicule ferroviaire selon l'une quelconque des revendications précédentes, **caractérisée en outre en ce que** le premier point, respectivement le second point, est situé à moins de 150 millimètres du premier conducteur, respectivement du second conducteur, de préférence à moins de 100 millimètres.

8. Partie de véhicule ferroviaire selon l'une quelconque des revendications précédentes **caractérisée en outre en ce qu'**une première zone de la paroi est située à moins de 100 millimètres, de préférence à moins de 150 millimètres, du premier conducteur, **en ce qu'**une seconde zone de la paroi est située à moins de 100 millimètres, de préférence moins de 150 millimètres du second conducteur, et **en ce que** les première et seconde zones sont séparées d'au moins 400 millimètres.

9. Véhicule ferroviaire comprenant une partie selon l'une quelconque des revendications 1 à 8.

## Patentansprüche

1. Schienenfahrzeugteil der Art, die Folgendes umfasst:
- ein elektrisch leitendes Dach (102);
- einen ersten und zweiten elektrischen Leiter (102, 106), die in der Lage sind, zu einem Betriebszeitpunkt des Schienenfahrzeugs ein jeweiliges Potenzial aufzuweisen, dessen Unterschied über 5 000 Volt beträgt, wobei das Dach den ersten Leiter und ein Scherenstromabnehmer den zweiten Leiter bildet; wobei der zweite Leiter (106) mit einem Isolator an dem Dach (102) befestigt ist;
- eine isolierende Verkleidung (118), die sich vom Dach (102) aus erhebt und den Scherenstromabnehmer (104) umgibt, um ein oben offenes Gehäuse zu bilden, das auch "Wanne" genannt wird, in dem der Scherenstromabnehmer angeordnet ist, , wobei die Verkleidung eine innere Wand umfasst;
- wobei diese innere Wand, die eine isolierende Wand (124; 126) bildet, die im Abstand mindestens zum ersten und/oder zweiten Leiter (102, 106) verläuft, einen ersten Punkt (P1; P2; X1) aufweist, der dem zweiten elektrischen Leiter (106) am nächsten liegt, und einen zweiten Punkt (P'1; P'2; X2), der dem ersten elektrischen Leiter (102) am nächsten liegt,
wobei das Schienenfahrzeugteil **dadurch gekennzeichnet ist, dass** die isolierende Wand (124; 126) mindestens eine Welle (136; 138), insbesondere mehrere, zwischen dem ersten und zweiten Punkt (P1, P'1; P2, P'2; X1, X2) umfasst, sodass der erste und zweite Punkt (P1, P'1; P2, P'2; X1, X2) entlang der isolierende Wand (124; 126) über einen festgelegten Abstand (D) getrennt sind, um das Auftreten von Lichtbögen zwischen dem ersten und zweiten elektrischen Leiter zu verhindern.

2. Schienenfahrzeugteil nach Anspruch 1, **dadurch gekennzeichnet, dass** mindestens eine Welle von der Welle oder der Vielzahl von Wellen (136; 138;) aus demselben Material besteht wie die Wand (124; 128).

3. Schienenfahrzeugteil nach Anspruch 1, **dadurch gekennzeichnet, dass** mindestens eine Welle von der Welle oder der Vielzahl von Wellen (136; 138) an der Wand (124; 126) angesetzt ist.

4. Schienenfahrzeugteil nach Anspruch 3, **dadurch gekennzeichnet, dass** das Material der mindestens einen angesetzten Welle stärker isolierend ist als das Material, aus dem die Wand besteht.

5. Schienenfahrzeugteil nach einem der vorhergehenden Ansprüche, ferner **dadurch gekennzeichnet, dass** der festgelegte Abstand (D) mindestens 400 Millimeter, noch bevorzugter zwischen 400 und 800 Millimeter, vorzugsweise zwischen 600 und 800 Millimeter, beträgt.

6. Schienenfahrzeugteil nach einem der vorhergehenden Ansprüche, ferner **dadurch gekennzeichnet, dass** der erste und zweite Punkt (P1, P'1; P2, P'2; X1, X2) in gerader Linie über einen Abstand d getrennt sind, und dadurch, dass der Abstand D mindestens 200 % größer ist als der Abstand d, vorzugsweise 300 % größer als der Abstand d.

7. Schienenfahrzeugteil nach einem der vorhergehenden Ansprüche, ferner **dadurch gekennzeichnet, dass** der erste Punkt beziehungsweise der zweite Punkt weniger als 150 Millimeter vom ersten Leiter beziehungsweise zweiten Leiter entfernt ist, vorzugsweise weniger als 100 Millimeter.

8. Schienenfahrzeugteil nach einem der vorhergehenden Ansprüche, ferner **dadurch gekennzeichnet, dass** ein erster Bereich der Wand weniger als 100 Millimeter, vorzugsweise weniger als 150 Millimeter, vom ersten Leiter entfernt ist, dadurch, dass ein zweiter Bereich der Wand weniger als 100 Millimeter, vorzugsweise weniger als 150 Millimeter, vom zweiten Leiter entfernt ist, und dadurch, dass der erste und zweite Bereich mindestens 400 Millimeter getrennt sind.

9. Schienenfahrzeug, das ein Teil nach einem der Ansprüche 1 bis 8 umfasst.

## Claims

1. A railway vehicle part of the type comprising:
- A roof (102) that is electrically conductive;
- first and second electrical conductors (102, 106) able to be at respective potentials the difference of which is greater than 5,000 volts at an operating moment of the railway vehicle, the roof constituting the first electrical conductor and a pantograph constituting the second electrical conductor (106), the second electric conductor (106) being fixed on the roof (102) with an isolator;
- an insulating cowling (118) rising from the roof and surrounding the pantograph (104) so as to form a housing open at the top, also called "tub", inside which the pantograph (104) is arranged, the cowling comprises an internal wall;
- said internal wall constituting an insulating wall (124; 126) extending away from at least one of the first and second conductors (102, 106), having a first point (P1; P2; X1) closest to the second electrical conductor (106) and a second point (P'1; P'2; X2) closest to the first electrical conductor (102),
the railway vehicle part being **characterised in that** the insulating wall (124; 126) comprises at least one undulation (136; 138), in particular plurality of undulations, between the first and second points (P1, P'1; P2, P'2; X1, X2) such that the first and second points (P1, P'1; P2, P'2; X1, X2) are separated along the insulating wall (124; 126) by a predetermined distance (D) such as to avoid the occurrence of electric arcs between the first and second electrical conductors.

2. The railway vehicle part according to claim 1, **characterised in that** at least one undulation among the undulation or the plurality of undulations (136; 138) is integral with the wall (124; 128).

3. The railway vehicle part according to claim 1, **characterised in that** at least one undulation among the undulation or the plurality of undulations `136; 138) is applied to the wall (124; 126).

4. The railway vehicle part according to claim 3, **characterised in that** the material of said at least one applied undulation is more insulating than the material forming the wall.

5. The railway vehicle part according to any of the preceding claims, characterised furthermore in that said predetermined distance (D) is at least 400 millimetres, preferably between 400 and 800 metres, preferably between 600 and 800 millimetres.

6. The railway vehicle part according to any of the preceding claims, characterised furthermore in that the first and second points (P1, P'1; P2, P'2; X1, X2) are separated by a distance d in a straight line, and in that the distance D is at least 200% greater than the distance d, preferably 300% greater than the distance d.

7. The railway vehicle part according to any of the preceding claims, characterised furthermore in that the first point, respectively the second point, is located less than 150 millimetres away from the first conductor, respectively the second conductor, preferably less than 100 millimetres away.

8. The railway vehicle part according to any of the preceding claims, characterised furthermore in that a first zone of the wall is located at least 100 millimetres away, preferably at least 150 millimetres away, from the first conductor, in that a second zone of the wall is located less than 100 millimetres, preferably less than 150 millimetres away from the second conductor, and in that the first and second zones are separated by at least 400 millimetres.

9. A railway vehicle comprising a part according to any of claims 1 to 8.
